# FASCICULE DE BREVET EUROPEEN

(11) **EP 2 665 946 B1**
(45) Date de publication et mention de la délivrance du brevet: **07.12.2016**
(21) Numéro de dépôt: 11815531.6
(22) Date de dépôt: 22.12.2011
(51) Int. Cl.: F16F 13/10

(54) **CALE HYDRO-ELASTIQUE MULTIFREQUENCES**
HYDROELASTISCHES MULTIFREQUENZ-DISTANZSTÜCK
MULTI-FREQUENCY HYDROELASTIC SHIM

(30) Priorité: 17.01.2011 FR 1150346
(43) Date de publication de la demande: 27.11.2013
(73) Titulaire: Peugeot Citroën Automobiles SA, 78140 Vélizy Villacoublay (FR)
(72) Inventeur: CHILLON, Jean, F-92100 Boulogne Billancourt (FR)
(74) Mandataire: Renous Chan, Véronique
(86) Numéro de dépôt international: PCT/FR2011/053163
(87) Numéro de publication internationale: WO 2012/098313

(56) Documents cités:
- EP-A2- 0 462 510
- FR-A1- 2 596 838
- JP-A- 2007 139 048
- US-A- 6 068 246

## Description

L'invention concerne une cale hydraulique, c'est à dire une cale hydraulique comportant un réservoir dont une paroi le délimitant est déformable, une chambre dont une paroi la délimitant est déformable, et un canal reliant la chambre au réservoir.

Une telle cale, reliant deux éléments dont un soumis à des vibrations, permet de filtrer les vibrations et de limiter leur transmission au deuxième élément. Le principe du fonctionnement d'une cale hydraulique est basée sur le résonateur de Helmholtz : le fluide contenu dans le réservoir, le canal et la chambre est confiné, et la partie de fluide contenue dans le canal présente une certaine inertie et résonne du fait de la déformation de la chambre.

Ce système est performant sur une gamme réduite de fréquences, et crée des résonances parasites dans les domaines de fréquences voisines.

Afin d'augmenter la gamme de fréquence, il a été conçu des cales à deux chambres, chaque chambre ayant une fréquence propre.

Ainsi, on connaît une cale hydraulique du type comportant un réservoir dont une paroi le délimitant est déformable, et plusieurs cellules hydro-élastiques qui sont toutes reliées en parallèle au réservoir, chaque cellule hydro-élastique comprenant une chambre dont une paroi la délimitant est déformable, et un canal reliant la chambre au réservoir, la cale comprenant au moins deux familles de cellules hydro-élastiques, les cellules hydroélastiques d'une même famille ayant une fréquence de résonance identique propre à cette famille.

La demande de brevet FR 2 617 930 divulgue une telle cale dans laquelle un réservoir dont la paroi déformable est réalisée par un bloc en élastomère relativement rigide, est en relation avec deux chambres en parallèle (chaque famille ne comportant qu'une cellule), chaque chambre étant délimitée par une paroi particulièrement souple, en forme de soufflet. Cependant, l'amélioration de l'amortissement des fréquences est faible.

Le document US 6,068,246 présente également une cale hydraulique selon le préambule de la revendication 1.

La présente invention vise à réaliser une cale permettant d'amortir de façon importante les fréquences, et ceci dans une gamme importante de fréquences.

L'invention concerne donc une cale hydraulique comportant un réservoir dont une paroi le délimitant est déformable, et plusieurs cellules hydro-élastiques qui sont toutes reliées en parallèle au réservoir, chaque cellule hydro-élastique comprenant une chambre dont une paroi la délimitant est déformable, et un canal reliant la chambre au réservoir, la cale comprenant au moins deux familles de cellules hydro-élastiques, les cellules hydroélastiques d'une même famille ayant une fréquence de résonance identique propre à cette famille, caractérisée en ce que la paroi déformable délimitant le réservoir possède une rigidité au moins 30 fois inférieure à la rigidité des parois déformables délimitant les chambres.

Ce rapport de rigidité permet d'avoir une cale permettant d'atténuer de façon très importante les vibrations ayant une fréquence proche des fréquences de résonance des cellules.

De préférence, les fréquences des cellules sont distribuées en fonction des fréquences des vibrations auxquelles est soumise la cale.

Selon l'invention, les parois déformables délimitant une chambre délimitent cette dernière perpendiculairement à un axe le long duquel s'étend le piston formé par la cale, et sont déformables perpendiculairement à cet axe.

Selon l'invention, la cale hydraulique comprend des poches isolées du réservoir et disposées entre les chambres de façon à permettre la déformation élastique des parois déformables délimitant ces dernières.

Dans une variante, la cale comprend une structure monobloc en matériau élastique délimitant latéralement l'ensemble des chambres et des poches.

Dans une variante, chaque canal est délimité perpendiculairement à un axe le long duquel s'étend le piston formé par la cale, par des parois indéformables.

Dans une autre variante, le canal de chaque cellule s'étend essentiellement selon une direction longitudinale parallèle à un axe le long duquel s'étend le piston formé par la cale.

De préférence, chaque canal est de forme cylindrique, l'axe du cylindre définissant la direction longitudinale de la cellule correspondante.

De préférence encore chaque canal est de forme hélicoïdale, l'axe de l'hélice définissant la direction longitudinale de la cellule correspondante.

Dans une variante, la cale comprend une plaque indéformable et normale à l'axe, délimitant axialement les chambres et les poches, et dans laquelle sont réalisés les canaux.

D'autres caractéristiques et avantages de l'invention ressortiront clairement de la description qui en est faite ci-après, à titre indicatif et nullement limitatif, en référence aux dessins annexés, dans lesquels :
- La figure 1 illustre une cale vue en perspective, conforme à un premier mode de réalisation de la présente invention ;
- La figure 2 illustre la cale de la figure 1, vue selon la même perspective, sans l'armature qui était visible au premier plan à la figure 1 ;
- La figure 3 illustre la cale des figures 1 et 2, vue selon la même perspective, sans la membrane qui était visible au premier plan à la figure 2;
- la figure 4 illustre la cale des figures 1 à 3, vue selon la même perspective, sans la plaque qui était visible au premier plan à la figure 3 ;
- la figure 5 illustre la cale des figures 1 à 4, vue selon la même perspective, sans la structure monobloc qui était visible au premier plan à la figure 4 ;
- la figure 6 illustre la cale des figures 1 à 5, selon une coupe passant par son axe ; et
- la figure 7 illustre une plaque pour une utilisation dans une cale conforme à un second mode de réalisation de la présente invention.

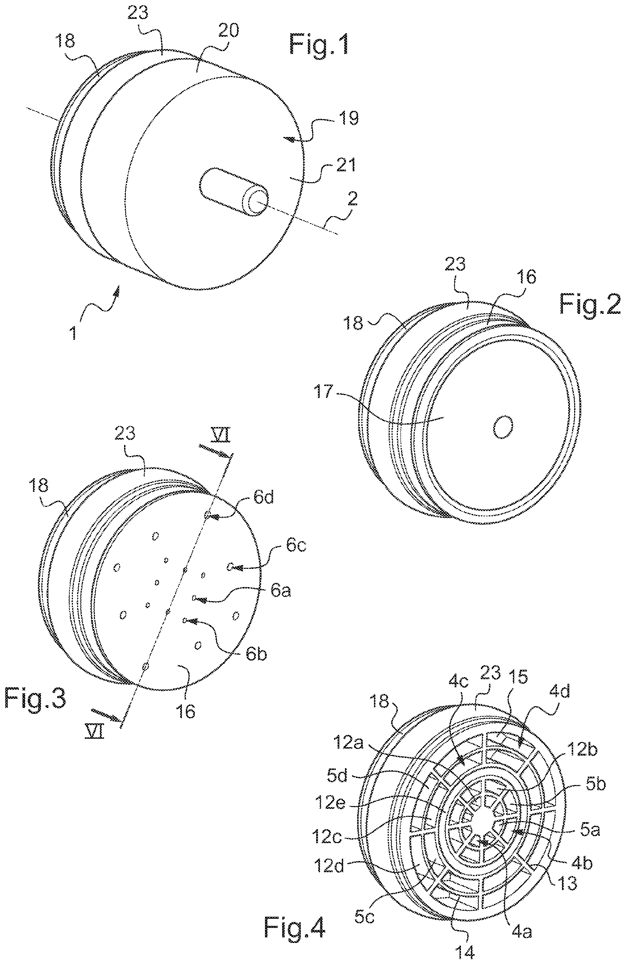

La figure 1 illustre une cale hydraulique 1 conforme à la présente invention. Une telle cale 1 permet de relier entre eux deux éléments tout en limitant la transmission des vibrations d'un élément à l'autre. Une cale 1 forme un piston qui s'étend selon un axe 2.

La cale 1 comprend un réservoir 3 dont une paroi 17 le délimitant est déformable, et plusieurs cellules hydro-élastiques 4a, 4b, 4c, 4d qui sont reliées en parallèle au réservoir 3 qui est rempli d'un liquide. Chaque cellule 4a, 4b, 4c, 4d comprend une chambre 5a, 5b, 5c, 5d qui est latéralement élastiquement déformable, et un canal 6a, 6b, 6c, 6d qui relie la chambre 5a, 5b, 5c, 5d correspondante au réservoir 3. Ainsi, chaque chambre 5a, 5b, 5c, 5d est délimitée par des parois 13, 14 déformables.

La cale 1 qui agit comme un piston se comprimant et se dilatant selon la direction axiale 2 sous l'effet des vibrations, transforme ces vibrations en un débit hydraulique unique imposé à toutes les cellules hydro-élastiques 4a, 4b, 4c, 4d dont les chambres se déforment latéralement. Chaque cellule 4a, 4b, 4c, 4d est assimilée à un batteur dynamique amorti.

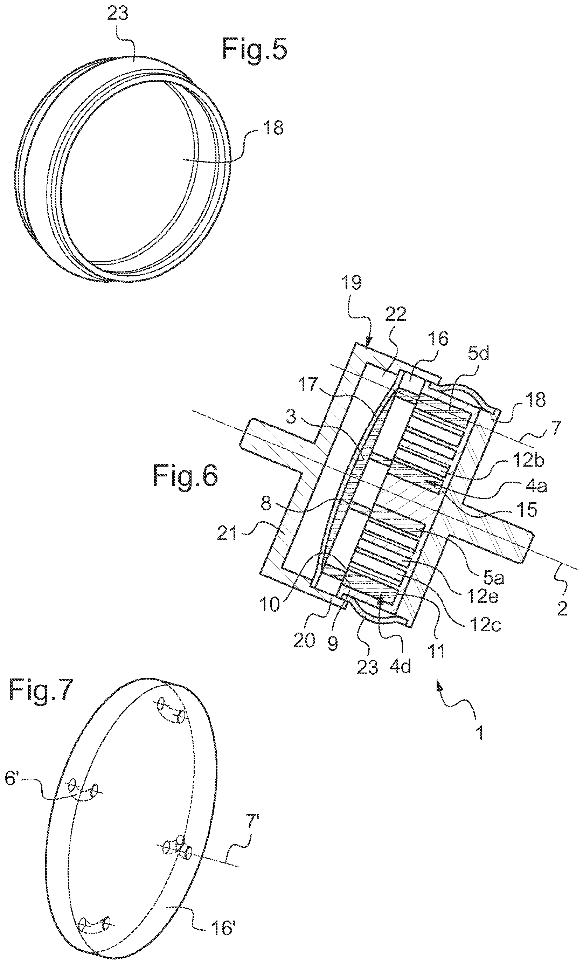

Comme illustré à la figure 6, pour chaque cellule hydro-élastique 4a, 4b, 4c, 4d, le canal 6a, 6b, 6c, 6d s'étend essentiellement selon une direction longitudinale 7 qui est parallèle à l'axe 2 de la cale1, et la chambre 5a, 5b, 5c, 5d prolonge le canal 6a, 6b, 6c, 6d selon cette direction longitudinale. Ici, tous les canaux 6a, 6b, 6c, 6d sont disposés à un même côté du réservoir 3.

La cale 1 comprend au moins deux familles de cellules hydroélastiques 4a, 4b, 4c, 4d, chaque famille ayant une fréquence de résonance qui lui est propre (dans le premier mode de réalisation, la cale 1 comprend quatre familles de cellule hydro-élastique 4a, 4b, 4c, 4d). Les fréquences des cellules hydro-élastiques 4a, 4b, 4c, 4d sont distribuées en fonction des fréquences des vibrations auxquelles est soumise la cale hydraulique.

La distribution des fréquences est définie par le dimensionnement géométrique des cellules hydro-élastiques 4a, 4b, 4c, 4d (plus précisément, de leurs chambres 5a, 5b, 5c, 5d et canaux 6a, 6b, 6c, 6d) et la flexibilité des parois délimitant les chambres 5a, 5b, 5c, 5d. La performance de filtrage des vibrations peut être optimisée en appliquant la théorie des batteurs de type peigne.

Afin d'avoir une atténuation efficace des vibrations, la paroi déformable 17 délimitant le réservoir 3 possède une rigidité au moins 30 fois inférieure à la rigidité des parois déformables 13, 14 délimitant les chambres 5a, 5b, 5c, 5d. De préférence, ce rapport est au moins égal à 100. Ainsi, dans le présent exemple, la souplesse (l'inverse de la rigidité) de la paroi déformable 17 du réservoir 3 est 2,6.10⁻⁹ m⁵.N⁻¹, et celle des parois déformables 13, 14 délimitant les chambres 5a, 5b, 5c, 5d est de 3.10⁻¹¹ m⁵.N⁻¹.

La disposition longiligne des cellules hydro-élastiques 4a, 4b, 4c, 4d permet d'en intégrer un nombre important à la cale 1, par exemple, plus de dix (dans le premier mode de réalisation, chaque famille de cellule comprend quatre cellules 4a, 4b, 4c, 4d, soit seize cellules intégrées dans la cale 1). Cette disposition permet également d'avoir des cellules de petite taille (de l'ordre du millimètre ou de quelques millimètres). La multiplication du nombre de cellules permet d'augmenter le nombre de familles et donc augmenter la qualité du filtrage.

Chaque canal 6a, 6b, 6c, 6d est délimité longitudinalement par une première section droite 8 qui le relie au réservoir 3, et une seconde section droite 9 opposée à la première section droite 8 qui le relie à la chambre 5a, 5b, 5c, 5d correspondante. De même, chaque chambre 5a, 5b, 5c, 5d est délimitée longitudinalement par une première section droite 10 située dans le même plan que la seconde section droite 9 du canal 6a, 6b, 6c, 6d correspondant, et une seconde section droite 11 opposée à la première section droite 10. Dans le présent exemple, ces différentes sections droites 8, 9, 10, 11 sont traversées par la direction longitudinale 7.

Afin de permettre la déformation latérale des chambres 5a, 5b, 5c, 5d, la cale 1 comprend des poches 12a, 12b, 12c, 12d, 12e qui sont disposées latéralement entre les chambres 5a, 5b, 5c, 5d et qui sont isolées du réservoir 3.

Dans le présent exemple, pour des raisons de simplicité de construction, toutes les chambres 5a, 5b, 5c, 5d sont de même longueur. De même, tous les canaux 6a, 6b, 6c, 6d sont également de même longueur. De ce fait, dans le présent mode de réalisation, les variations de fréquence de résonance des cellules hydro-élastiques 4a, 4b, 4c, 4d sont basées sur les variations des sections droites des chambres 5a, 5b, 5c, 5d et des canaux 6a, 6b, 6c, 6d.

Pour des raisons de simplicité de construction, dans le présent mode de réalisation, toutes les poches 12a, 12b, 12c, 12d, 12e sont de même longueur, et ont la même longueur que les chambres 5a, 5b, 5c, 5d.

Dans les présents exemples, la structure élastique de la cale 1 délimitant les chambres 5a, 5b, 5c, 5d et les poches 12a, 12b, 12c, 12d, 12e est formée par une structure monobloc en matériau élastique. Cette structure monobloc délimite latéralement l'ensemble des chambres 5a, 5b, 5c, 5d et des poches 12a, 12b, 12c, 12d, 12e.

La structure monobloc comprend des parois radiales 13 qui sont centrées sur l'axe 2 du piston et des parois annulaires 14 qui sont également centrées sur l'axe 2.

La structure monobloc comprend des cavités qui forment soit des chambres, soit des poches. Excepté une, toutes les cavités sont délimitées par deux parois radiales adjacentes et deux parois annulaires adjacentes ; la cavité faisant exception est une cavité annulaire qui forme une poche, qui s'étend angulairement sur 360° et qui sépare radialement deux groupes de cavités s'étendant radialement sur deux cavités.

La structure monobloc comprend également une paroi axiale 15 qui forme l'extrémité axiale des chambres 5a, 5b, 5c, 5d et des poches 12a, 12b, 12c, 12d, 12e (et qui porte donc la seconde section droite 11 des différentes chambres 5a, 5b, 5c, 5d).

Dans les présents exemples, la structure délimitant les canaux 6a, 6b, 6c, 6d est formée par une plaque 16 indéformable, plane et normale à l'axe 2 du piston. La plaque 16 délimite axialement les chambres 5a, 5b, 5c, 5d et les poches 12a, 12b, 12c, 12d, 12e, (et porte donc la première section droite 10 des différentes chambres 5a, 5b, 5c, 5d).

Chaque canal 6a, 6b, 6c, 6d est formé par un orifice traversant la plaque 16 et, en conséquence, est délimité latéralement par des parois indéformables.

Dans le premier mode de réalisation, chaque canal 6a, 6b, 6c, 6d est de forme cylindrique dont l'axe définit la direction longitudinale 7 de la cellule correspondante. Dans le second mode de réalisation, tel qu'illustré à la figure 7, chaque canal 6' est de forme hélicoïdale dont l'axe de l'hélice définit la direction longitudinale 7' de la cellule correspondante.

La position des orifices dans la plaque 16 distingue les chambres 5a, 5b, 5c, 5d des poches 12a, 12b, 12c, 12d, 12e.

Le réservoir 3 est délimité axialement, d'un côté par la plaque 16 et de l'autre par une paroi déformable 17 qui, ici, est fixée à la plaque 16.

Par ailleurs, afin de permettre la liaison avec les deux éléments, la cale 1 comprend deux armatures 18, 19 (entre lesquelles sont disposés la structure monobloc délimitant les chambres 5a, 5b, 5c, 5d et les poches 12a, 12b, 12c, 12d, 12e, la plaque indéformable 16 délimitant les canaux 6a, 6b, 6c, 6d, et la paroi déformable17).

Une première armature 18 est formée par un disque indéformable qui s'étend normalement à l'axe 2 du piston et auquel est fixée la paroi axiale 15 de la structure monobloc. La seconde armature 19 est formée par un cylindre indéformable comportant une paroi cylindrique 20 et une paroi de fond 21. La paroi cylindrique ceinture la plaque 16, le réservoir 3, la paroi 17 et un espace vide 22 qui est délimité axialement d'un côté par la paroi 17 et de l'autre par la paroi de fond 21, comme illustré à la figure 6.

Enfin, la cale 1 comprend une ceinture annulaire 23 qui est élastiquement déformable, qui ceinture la structure monobloc et qui s'étend axialement de l'une à l'autre des deux armatures 18, 19.

## Revendications

1. Cale hydraulique (1) comportant un réservoir (3) dont une paroi (17) le délimitant est déformable, et plusieurs cellules hydro-élastiques (4a, 4b, 4c, 4d) qui sont toutes reliées en parallèle au réservoir (3), chaque cellule hydroélastique (4a, 4b, 4c, 4d) comprenant une chambre (5a, 5b, 5c, 5d) dont une paroi (13, 14) la délimitant est déformable, et un canal (6a, 6b, 6c, 6d) reliant la chambre (5a, 5b, 5c, 5d) au réservoir (3), la cale (1) comprenant au moins deux familles de cellules hydro-élastiques (4a, 4b, 4c, 4d), les cellules hydroélastiques (4a, 4b, 4c, 4d) d'une même famille ayant une fréquence de résonance identique propre à cette famille, **caractérisée en ce que** la paroi déformable (17) délimitant le réservoir (3) possède une rigidité au moins 30 fois inférieure à la rigidité des parois déformables (13, 14) délimitant les chambres (5a, 5b, 5c, 5d), les parois déformables (13, 14) délimitant une chambre (5a, 5b, 5c, 5d) délimitent cette dernière perpendiculairement à un axe (2) le long duquel s'étend le piston formé par la cale (1), et sont déformables perpendiculairement à cet axe (2), et **en ce que** la cale (1) comprend des poches (12a, 12b, 12c, 12d, 12e) isolées du réservoir (3) et disposées entre les chambres (5a, 5b, 5c, 5d) de façon à permettre la déformation élastique des parois déformables (13, 14) délimitant ces dernières.

2. Cale hydraulique (1) selon la revendication 1, **caractérisée en ce que** les fréquences des cellules (4a, 4b, 4c, 4d) sont distribuées en fonction des fréquences des vibrations auxquelles est soumise la cale (1).

3. Cale hydraulique (1) selon la revendication 1 ou la revendication 2, **caractérisée en ce qu'**elle comprend une structure monobloc en matériau élastique délimitant latéralement l'ensemble des chambres (5a, 5b, 5c, 5d) et des poches (12a, 12b, 12c, 12d, 12e).

4. Cale hydraulique (1) selon l'une des revendications 1 à 3, **caractérisée en ce que** chaque canal (6a, 6b, 6c, 6d) est délimité perpendiculairement à un axe (2) le long duquel s'étend le piston formé par la cale (1), par des parois indéformables.

5. Cale hydraulique (1) selon l'une des revendications 1 à 4, **caractérisée en ce que** le canal (6a, 6b, 6c, 6d) de chaque cellule (4a, 4b, 4c, 4d) s'étend essentiellement selon une direction longitudinale (7) parallèle à un axe (2) le long duquel s'étend le piston formé par la cale (1).

6. Cale hydraulique (1) selon la revendication 5, **caractérisée en ce que** chaque canal (6a, 6b, 6c, 6d) est de forme cylindrique, l'axe du cylindre définissant la direction longitudinale (7) de la cellule correspondante.

7. Cale hydraulique (1) selon la revendication 6, **caractérisée en ce que** chaque canal (6') est de forme hélicoïdale, l'axe (7') de l'hélice définissant la direction longitudinale (7) de la cellule correspondante.

8. Cale hydraulique (1) selon l'une des revendications 5 à 7 dépendantes de la revendication 4, **caractérisée en ce qu'**elle comprend une plaque (16) indéformable et normale à l'axe (2), délimitant axialement les chambres (5a, 5b, 5c, 5d) et les poches (12a, 12b, 12c, 12d, 12e), et dans laquelle sont réalisés les canaux (6a, 6b, 6c, 6d).

## Patentansprüche

1. Hydraulisches Distanzstück (1), das einen Behälter (3) umfasst, von dem eine Wand (17), die ihn abgrenzt, verformbar ist, und mehrere hydroelastische Zellen (4a, 4b, 4c, 4d), die alle parallel mit dem Behälter (3) verbunden sind, wobei jede hydroelastische Zelle (4a, 4b, 4c, 4d) eine Kammer (5a, 5b, 5c, 5d) umfasst, von der eine Wand (13, 14), die sie abgrenzt, verformbar ist, und einen Kanal (6a, 6b, 6c, 6d), der die Kammer (5a, 5b, 5c, 5d) mit dem Behälter (3) verbindet, wobei das Distanzstück (1) mindestens zwei Familien hydroelastischer Zellen (4a, 4b, 4c, 4d) umfasst, wobei die hydroelastischen Zellen (4a, 4b, 4c, 4d) ein und derselben Familie eine identische Resonanzfrequenz, die dieser Familie eigen ist, hat, **dadurch gekennzeichnet, dass** die verformbare Wand (17), die den Behälter (3) abgrenzt, eine Steifigkeit besitzt, die mindestens 30 Mal geringer ist als die Steifigkeit der verformbaren Wände (13, 14), die die Kammern (5a, 5b, 5c, 5d) abgrenzen, wobei die verformbaren Wände (13, 14), die eine Kammer (5a, 5b, 5c, 5d) abgrenzen, diese Letztere senkrecht zu einer Achse (2) abgrenzen, entlang welcher sich der Kolben erstreckt, der von dem Distanzstück (1) gebildet wird, und die senkrecht zu dieser Achse (2) verformbar sind, und dass das Distanzstück (1) Taschen (12a, 12b, 12c, 12c, 12e) umfasst, die von dem Behälter (3) isoliert und zwischen den Kammern (5a, 5b, 5c, 5d) derart angeordnet sind, dass die elastische Verformung der verformbaren Wände (13, 14), die diese Letzteren abgrenzen, erlaubt wird.

2. Hydraulisches Distanzstück (1) nach Anspruch 1, **dadurch gekennzeichnet, dass** die Frequenzen der Zellen (4a, 4b, 4c, 4d) in Abhängigkeit von den Frequenzen der Schwingungen, welchen das Distanzstück (1) unterworfen wird, verteilt sind.

3. Hydraulisches Distanzstück (1) nach Anspruch 1 oder 2, **dadurch gekennzeichnet, dass** es eine einstückige Struktur aus elastischem Werkstoff umfasst, die seitlich sämtliche Kammern (5a, 5b, 5c, 5d) und Taschen (12a, 12b, 12c, 12c, 12e) abgrenzt.

4. Hydraulisches Distanzstück (1) nach einem der Ansprüche 1 bis 3, **dadurch gekennzeichnet, dass** jeder Kanal (6a, 6b, 6c, 6d) senkrecht zu einer Achse (2), entlang welcher sich der Kolben, der von dem Distanzstück (1) gebildet wird, erstreckt, durch unverformbare Wände abgegrenzt ist.

5. Hydraulisches Distanzstück (1) nach einem der Ansprüche 1 bis 4, **dadurch gekennzeichnet, dass** sich der Kanal (6a, 6b, 6c, 6d) jeder Zelle (4a, 4b, 4c, 4d) im Wesentlichen entlang einer Längsrichtung (7) parallel zu einer Achse (2), entlang der sich der Kolben, der von dem Distanzstück (1) gebildet wird, erstreckt, erstreckt.

6. Hydraulisches Distanzstück (1) nach Anspruch 5, **dadurch gekennzeichnet, dass** jeder Kanal (6a, 6b, 6c, 6d) zylindrische Form hat, wobei die Achse des Zylinders die Längsrichtung (7) der entsprechenden Zelle definiert.

7. Hydraulisches Distanzstück (1) nach Anspruch 6, **dadurch gekennzeichnet, dass** jeder Kanal (6') Schraubenform hat, wobei die Achse (7') der Schraube die Längsrichtung (7) der entsprechenden Zelle definiert.

8. Hydraulisches Distanzstück (1) nach einem der Ansprüche 5 bis 7, die von Anspruch 4 abhängen, **dadurch gekennzeichnet, dass** es eine Platte (16), die unverformbar und zu der Achse (2) senkrecht ist, umfasst, die axial die Kammern (5a, 5b, 5c, 5d) und die Taschen (12a, 12b, 12c, 12c, 12e) abgrenzt, und in der die Kanäle (6a, 6b, 6c, 6d) hergestellt sind.

## Claims

1. A hydraulic shim (1) comprising a reservoir (3), a wall (17) of which that defines same is deformable, and a plurality of hydroelastic cells (4a, 4b, 4c, 4d) which are all connected to the reservoir (3) in parallel, each hydroelastic cell (4a, 4b, 4c, 4d) including a chamber (5a, 5b, 5c, 5d), a wall (13, 14) of which that defines same is deformable, and a channel (6a, 6b, 6c, 6d) connecting the chamber (5a, 5b, 5c, 5d) to the reservoir (3), the shim (1) including at least two families of hydroelastic cells (4a, 4b, 4c, 4d), the hydroelastic cells (4a, 4b, 4c, 4d) of a single family having an identical resonance frequency which is specific to said family, **characterized in that** the deformable wall (17) defining the reservoir (3) has a rigidity at least 30 times less than the rigidity of the deformable walls (13, 14) defining the chambers (5a, 5b, 5c, 5d), the deformable walls (13, 14) defining a chamber (5a, 5b, 5c, 5d) define the latter perpendicularly to an axis (2) along which the piston formed by the shim (1) extends, and are deformable perpendicularly to this axis (2), and **in that** the shim (1) includes pockets (12a, 12b, 12c, 12d, 12e) isolated from the reservoir (3), and disposed between the chambers (5a, 5b, 5c, 5d) so as to permit the elastic deformation of the deformable walls (13, 14) defining these latter.

2. The hydraulic shim (1) according to claim 1, **characterized in that** the frequencies of the cells (4a, 4b, 4c, 4d) are distributed as a function of the frequencies of the vibrations to which the shim (1) is subjected.

3. The hydraulic shim (1) according to claim 1 or 2, **characterized in that** it includes a one-piece structure of elastic material, defining laterally the set of chambers (5a, 5b, 5c, 5d) and pockets (12a, 12b, 12c, 12d, 12e).

4. The hydraulic shim (1) according to one of claims 1 to 3, **characterized in that** each channel (6a, 6b, 6c, 6d) is defined perpendicularly to an axis (2) along which the piston formed by the shim (1) extends, by non-deformable walls.

5. The hydraulic shim (1) according to one of claims 1 to 4, **characterized in that** the channel (6a, 6b, 6c, 6d) of each cell (4a, 4b, 4c, 4d) extends substantially along a longitudinal direction (7) parallel to an axis (2) along which the piston formed by the shim (1) extends.

6. The hydraulic shim (1) according to claim 5, **characterized in that** each channel (6a, 6b, 6c, 6d) is of cylindrical shape, the axis of the cylinder defining the longitudinal direction (7) of the corresponding cell.

7. The hydraulic shim (1) according to claim 6, **characterized in that** each channel (6') is of helicoidal shape, the axis (7') of the helix defining the longitudinal direction (7) of the corresponding cell.

8. The hydraulic shim (1) according to one of claims 5 to 7, dependent on claim 4, **characterized in that** it includes a plate (16) which is non-deformable and normal to the axis (2), axially defining the chambers (5a, 5b, 5c, 5d) and the pockets (12a, 12b, 12c, 12d, 12e), and in which the channels (6a, 6b, 6c, 6d) are formed.
